# EUROPEAN PATENT APPLICATION

(11) **EP 4 726 535 A1**
(43) Date of publication of application: **15.04.2026**
(21) Application number: 25206230.2
(22) Date of filing: 02.10.2025
(51) Int. Cl.: G06F 8/73, G06F 8/75, G06F 8/71

(54) **MULTI-AGENT CODE REVIEW COMMENT GENERATION**

(30) Priority: 08.10.2024 US 202463704759 P; 26.02.2025 US 202519064362
(71) Applicant: Microsoft Technology Licensing, LLC, Redmond, WA 98052 (US)
(72) Inventor: FU, Shengyu, Glasgow, 98052-6399 (US); HINDMAN, Birgit, Glasgow, 98052-6399 (US); HUANG, Maoliang, Glasgow, 98052-6399 (US); LIU, Xiaoyu, Glasgow, 98052-6399 (US); TULI, Sneha Bhupindersingh, Glasgow, 98052-6399 (US); YOU, Dongjiang, Glasgow, 98052-6399 (US); ZHANG, Shuo, Glasgow, 98052-6399 (US)
(74) Representative: CMS Cameron McKenna Nabarro Olswang LLP

(57) **Abstract**

A code review comment is automatically generated using multiple agents that perform a dedicated task using a particular language model. A code quality estimator agent uses a code quality encoder model to determine whether a code change to a file of a repository presents a risk to the repository if merged. For those code changes classified as presenting a risk, a comment generator agent uses a generative language model to generate an initial code review comment for the code change and determines a severity of the issue with the code change. A comment critic agent uses a reasoning language model to critique the initial code review comment generated by the generative language model. A final code review comment is output by the comment critic agent when the comment critic agent determines that the initial code review comment is satisfactory.

## Description

### BACKGROUND

Software developers often utilize the code review process during software development to review the source code under development. Software developers inspect the source code to discover errors, ensure compliance with best practice standards, and identity vulnerabilities such as race conditions, malware, memory leaks, buffer overflows, format string exploits, and the like. Software developers use code review to find these problems before releasing the software, as they may have overlooked them during the development of the source code. A software developer often performs code review manually, spending a significant amount of time to understand and review the source code program. A software developer needs to understand the source code program's logic, functionality, style, and other factors to perform a code review. When a software developer performs the code review process manually, it is subject to human errors.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Multiple agents generate a code review comment for a code change that a developer made to a source code file of a repository. An agent is a software component that performs a specific task in the code review comment generation process by interacting with a dedicated language model. A code quality estimator agent uses a code quality encoder model, to determine whether a code change to a file of a repository presents a risk if merged. For a code change classified as presenting a risk, the code quality estimator agent invokes a comment generator agent. The comment generator agent uses a generative language model to generate a code review comment for the code change and determine the severity of the issue with the code change. The comment critic agent uses a reasoning language model to critique the code review comment generated by the generative language model based on quality criteria. The code review comment is output by the comment critic agent when the comment critic agent determines that the code review comment complies with the quality criteria.

These and other features and advantages will be apparent from a reading of the following detailed description and a review of the associated drawings. It is to be understood that both the foregoing general description and the following detailed description are explanatory only and are not restrictive of aspects as claimed.

### BRIEF DESCRIPTION OF DRAWINGS

Fig. 1 is a schematic diagram illustrating an example of a system for generating a code review comment using multiple agents.
Fig. 2 is a flow diagram illustrating a method of the multi-agent code review comment generation process.
Figs. 3A - 3C illustrate an example of an input to a language model and model response for the model to generate a code review comment for a code change and to determine the severity of the issue identified in the code review comment.
Fig. 4 illustrates an example of an input to a language model and the model response that verifies the code review comment previously generated.
Fig. 5 is a schematic diagram illustrating a first aspect of an operating environment of the multi-agent code review comment generation system in a version-controlled source code repository.
Fig. 6 is a block diagram illustrating a second aspect of an operating environment.

### DETAILED DESCRIPTION

### Overview

Aspects of the present disclosure pertain to the automation of a code review comment for code changes made to a source code program using multiple agents. An agent is an executable software component that performs a particular task in the code review comment generation process with a specific-type of machine learning model. An agent interacts with other agents within a workflow to determine whether or not a code change is risky to merge into a codebase, to generate a code review comment when the code change is risky, to ensure that the machine-generated code review comment is useful, and to determine when to stop the code review comment generation process.

The system segments the code review comment generation process into distinct steps, with each agent responsible for a particular task. The agents work in sequence, passing the output of one agent to the next, culminating in the generation of a code review comment. In an aspect, the code review comment generation process includes a code quality estimator agent, a comment generator agent, and a comment critic agent.

The code quality estimator agent receives a code change from a pull request and uses a code quality encoder model to determine the quality of the code change. The code quality encoder model outputs a label indicating whether the code change can be merged back into the repository without additional modifications or whether it is risky and requires a modification. If the code quality estimator agent determines that the code change presents a risk if merged, the code quality estimator agent invokes the comment generator agent to analyze the code change. The comment generator agent uses a generative language model to generate a code review comment for the code change and to determine the severity of the issue with the code change.

If the severity of the issue with the code change is low, then the comment generator agent terminates the process and outputs a message to the user. Otherwise, if the severity of the issue with the code change is high, then the code review comment is passed on to the comment critic agent. The comment critic agent uses a reasoning language model to review the code review comment generated by the generative language model based on quality criteria. If the comment critic agent determines that the code review comment provides a correct suggestion, then the code review comment is output to the user and the process terminates. Otherwise, the code review comment is not output to the user, a message is output to the user and the process terminates.

The techniques disclosed herein pertain to the technical problem of generating a more accurate code review comment for a code change autonomously without manual intervention. The technical features associated with addressing this problem are the multiple agents that perform a dedicated task with a dedicated language model. The technical effect achieved is a more accurate and relevant code review comment that streamlines the code development process without undue computational burden.

Attention now turns to a more detailed description of the system, device, and methods of the multi-agent code review comment generation.

### System

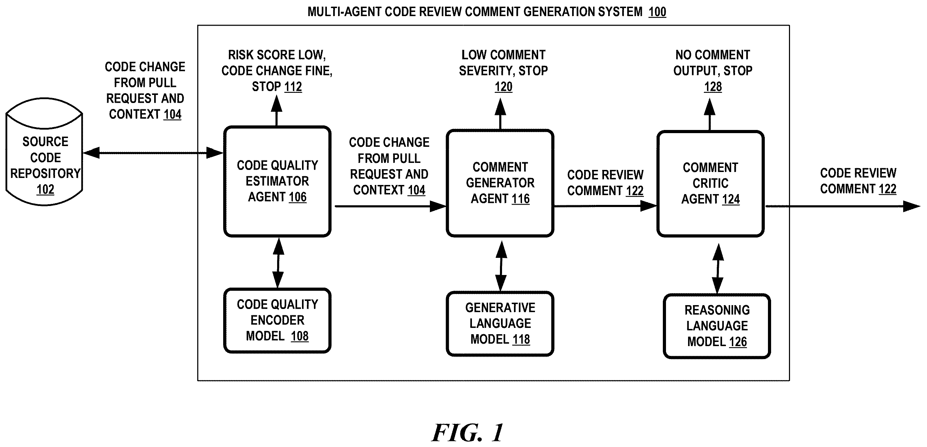

Referring to Fig. 1, there is shown a configuration of a multi-agent code review comment generation system 100. The system 100 interacts with a version-controlled source code repository 102. Code review is a process that is often part of a version-controlled source code repository. A version-controlled source code repository 102 manages changes to the files of a repository. Each developer obtains a full copy of the files in the repository in their own branch. The original code is typically stored in a master branch in a separate computing device. The developer makes changes to their version of a file of the repository. The change to the file is noted in a commit. Before a change is merged back into the original file, the change is reviewed using the code review process.

The code review process is initiated from issuance of a pull request. A pull request is a request to merge one or more commits into a different branch of the repository, such as the master branch. The pull request contains a code change. The code change and the context of the code change 104 is input to the code quality estimator agent 106. In an aspect, the context 104 includes a file-level context and a repository-level context. The file-level context includes import statements, global attributes, the signature of the class where the change occurs, methods that are adjacent to or directly invoked in the area of the code change, and method signatures of other methods in the file. The repo-level context includes method signatures used in the source code program that are defined in other files in the same repository.

The code quality estimator agent 106 determines the risk of directly merging the code change into a file of a repository 102. The code quality encoder model 108, given the code change, outputs a risk score indicating the risk of directly merging the code change into the repository 102. Risks associated with merging a code change directly into the repository include the introduction of bugs into the repository or regression of the code which can cause unexpected behavior and instability in a file requiring additional testing to resolve the issues. Code regression is a bug that occurs when a software feature stops working after a modification is made to the source code.

The code quality encoder model 108 receives a code change in a code diff format. The code diff format shows the changes between two files, such as the original source code and the code change in sequences of lines common to both files, interspersed with groups of differing lines. A code diff hunk is a sequence of changed source code lines, including deleted lines, surrounded by a few unchanged lines or context. The code diff format is an efficient representation of the code changes since the unchanged lines occur only once. The code diff format includes diff characters at the beginning of each line. The diff characters denote changes with "-" and "+" tags and no changes with a blank space. The use of the code diff format to represent the code changes is beneficial since the model is better able to learn code changes. The code diff hunks are a compact and convenient format for showing the code before and the code after the change which includes the editing steps at a given granularity, such as at the line level.

The following is an example of a code diff hunk for the function written in the Python programming language, get_current_datetime(self):

```
  def get_current_datetime(self):
  ‴‴Return the current date and time."""
  + util = UtilityClass( )
  - return datetime.datetime.now( )
  + return util.get_formattd_date(datetime.datetime.now( ))
```

The code diff hunk above represents a code change. The '+' character preceding a line of code indicates that the line of code is an addition and the '-' character preceding a line of code indicates deletion of the line of code.

In an aspect, the code quality encoder model 108 is a binary classifier configured as a neural encoder transformer model with attention. A neural encoder transformer model with attention processes an input sequence and transforms it into a sequence of continuous representations known as an embedding. The model consists of a number of stacked encoder blocks where each encoder block consists of self-attention layer and a neural network layer.

The self-attention layer uses both the left and right context of an input sequence to identify which parts of an input sequence are relevant to each token in the output sequence. The self-attention layer is used to decide which parts of the input embedding are important for each token since the encoder is limited to encoding a fixed-size vector. The self-attention layer gathers information about the relevant context of a given token, calculates attention weights between different tokens within the input sequence, and then encodes that context into a vector which represents the token.

The parameters of a machine learning model, the embeddings, weights and biases, define how input data translates into the required output. These parameters are learned from the training of model, either pre-training or fine-tuning, with the training data. The neural network layer contains mathematical functions that generate these parameters. The formulas in the neural network layer calculate the error of the model on the training data which is then used to update the model's parameters in the direction of the error loss. In an aspect, the model learns the parameters through the optimization of a cost function used by the neural network layer of the model. The cost function determines the error loss which is then backpropagated to the preceding layers of the model. The model's parameters are updated through backpropagation based on the error determined by the cost function.

In an aspect, the code quality encoder model 108 is generated by fine-tuning the encoder portion of a pre-trained encoder-decoder neural transformer model with attention. In an aspect, the pre-trained encoder-decoder model is trained on a large corpus of natural language text and source code. An encoder-decoder neural transformer model with attention consists of a number of stacked encoder blocks coupled to a number of stacked decoder blocks. The encoder blocks produce an embedding sequence for an input sequence and the decoder blocks generate an output sequence.

Pre-training and fine-tuning are both training processes but differ in the type of training data used. Pre-training is the process where the model's parameters (e.g., embeddings, weights, biases) are learned from unsupervised data. Unsupervised data is unlabeled data that the model analyzes to discover patterns in the data that map the input to the target output. Fine-tuning is the process where the model's parameters are learned or updated from supervised data. Supervised data contains labeled data that is tagged with the correct answer.

In an aspect, the pre-trained encoder-decoder model consists of 12 encoder layer and 12 decoder layers with 12 attention heads in each encoder and decoder layer with a total of 223 million parameters. The pre-trained model is pre-trained on a large-scale unsupervised code review training dataset derived from various code review tasks. The pre-trained model learns the relationships between the code changes and the code review comments from training on unsupervised pre-training datasets. In an aspect, the pre-training datasets include a denoising code diff pre-training dataset, a denoising code diff pre-training dataset, a denoising code review pre-training dataset and pairs of changed code with an associated code review comment.

The denoising code diff pre-training dataset consists of samples of code changes in a diff format with spans of the code lines masked. The pre-trained model is trained to learn to predict the masked spans of code lines. The denoising code diff pre-training dataset consists of samples of code changes in a diff format having masked special tokens. The pre-trained model is trained to learn to predict the special token to replace the masked special token in a particular position. The denoising code review pre-training dataset consists of samples of code review comments having masked tokens. The pre-trained model is trained to learn to predict the tokens to replace the masked tokens.

The encoder portion of the pre-trained model is then fine-tuned as a binary classifier on pairs of training samples, where each pair includes a code change in a diff format and an associated label. The label is either a 1 or 0, where 0 indicates that the code diff is of a good quality and ready to be merged and 1 indicates that the code diff is risky and needs a code review comment to improve the code change. The fine-tuning of the neural encoder portion of the pre-trained model generates a neural encoder model with attention that learns to classify a code change in a diff format into one of two classes: risky code diff (label of '1') or good quality code diff (label of '0').

When the code change is classified by the code quality encoder model 108 with the label of '1' which is high risk, the code change 104 is further processed by the comment generator agent 116. A code change classified with the label of '0' is a low risk that does not need further processing in the multi-agent code review comment generation system 100. An output message 112 is generated to the user so the code change can be merged back into the repository.

The comment generator agent 116 uses a generative language model 118 to perform two tasks. The first task of the generative language model 118 is to generate a code review comment for the code change determined to be a high risk by the code quality estimator agent 106. The second task is for the generative language model 118 to generate a severity score indicating a risk level of the issue presented in the code change.

Generative artificial intelligence (AI) is a broad category of large language models that generate new content, such as, without limitation, images, text, source code, music, audio, and/or video. A language model is a neural-based machine learning model capable of understanding and generating text across various tasks. The language model is often trained on a large corpus of data and contains billions of parameters.

Machine learning pertains to the use and development of computer systems that are able to learn and adapt without following explicit instructions by using algorithms and statistical models to analyze and draw inferences from patterns in data. Machine learning uses different types of statistical methods to learn from data and to predict future decisions. Traditional machine learning includes classification models, data mining, Bayesian networks, Markov models, clustering, and visual data mapping.

Deep learning differs from traditional machine learning since it uses multiple stages of data processing through many hidden layers of a neural network to learn and interpret the features and the relationships between the features. Deep learning embodies neural networks which differs from the traditional machine learning techniques that do not use neural networks.

Neural transformer models are one type of deep learning model that utilizes an attention mechanism. Attention directs the neural network to focus on a subset of features or tokens in an input sequence thereby learning different representations from the different positions of the tokens in an input sequence. The neural transformer model handles dependencies between its input and output with attention and without using recurrent neural networks (RNN) (e.g., long short-term memory (LSTM) network) and convolutional neural networks (CNN).

A traditional neural transformer model is composed of encoder blocks coupled to decoder blocks. The encoder blocks transform an input into an embedding and the decoder blocks takes the embeddings of the input and decodes them into an output. The encoder-decoder configuration of a neural transformer model is typically used for sequence-to-sequence tasks where the model takes an input sequence that is translated into an output sequence. Examples of sequence-to-sequence tasks include, without limitation, machine translation, text summarization, and speech recognition where the input and output are both sequences of data.

In an aspect, the generative language model 118 is a Generative Pre-trained Transformer (GPT) model. The GPT is a transformer-based language model that is pre-trained on a massive corpus of text to learn the statistical patterns and structure of a natural language. The pre-training phase is instrumental for the model to develop a general understanding of the language so that is can be applied to different tasks. Examples of a generative language model include the GPT-4 models offered by OpenAI, Pathways Language Model (PaLM), Chinchilla, the Gemini multi-modal models of Google, LLaMa, and the Phi-3 models offered by Microsoft.

A GPT model is configured with only decoder blocks. The input of the decoder model is an input sequence composed of tokens where each token is an n-dimensional embedding. The output is a probability distribution of the next token/word that comes after the previously generated output sequence. The decoder generates tokens of an output sequence autoregressively, one time step at a time using the previously generated tokens and the encoded input information. At each timestep, the model outputs a probability distribution of the next token/word that comes after the previously generated output and selects the token with the highest probability as the predicted token and it is fed as input to the next step.

In an aspect, the decoder block consists of a masked self- attention layer and a feed forward neural network layer. The first decoder block receives an input sequence composed of tokens where each token is an n-dimensional embedding. The masked self-attention layer transforms the representation of each token in a sequence based upon its relationship to other tokens in the sequence and masks out future positions. The feed forward neural network applies a non-linear activation function to the output of the masked self-attention layer enabling the model to learn more relationships between the tokens.

After the input is forwarded through all the decoder blocks sequentially, the output is forwarded through one final linear layer. This final linear layer maps the output of the decoder model back to the size of the model's vocabulary. The output is the probability of each token being the next token in the output sequence.

In an aspect, the generative language model is one of OpenAI's GPT-4 models, such a GPT-4o. The GPT-4 models are pre-trained on publicly-available multi-modal data and then fine-tuned with reinforcement learning feedback from human feedback (RLHF). Reinforcement learning is a type of machine learning where an agent learns to make decisions by interacting with an environment, receiving feedback in the form of rewards for positive actions and penalties for negative ones. The model learns through trial and error to maximize its long-term reward within the environment. RLHF incorporates human feedback in the rewards function so the model can perform tasks more aligned with the goals indicated by a human.

In an aspect, the generative language model 118 is hosted on an external server and accessed over a network through an application programming interfaces (API). The input to a language model may be issued through HTTP-based Representational State Transfer (REST) APIs. A REST API or web API is an API that conforms to the REST protocol. In the REST protocol, a remote server hosting the language model contains a publicly-exposed endpoint having a defined request and response structure. The comment generator agent 116 issues web APIs containing an input to the remote server to instruct the large language model to perform the intended task for the given input.

In an aspect, the generative language model 118 is used in a beam search that uses the probability distributions output by the generative language model 118 to generate the output, either the natural language text and/or source code. The generative language model 118 is given an input and the beam search iterates over a number of timesteps generating partial sequences of the output at each timestep. The probability distribution is based on a conditional probability of a word in the model's vocabulary likely to follow the preceding words in a partial sequence. The probability distribution is based on the learned patterns from the training data.

At each timestep, the beam search uses the probability distribution generated by the generative language model to identify the next token or word likely to be the next word in a partial sequence. The beam search expands the search by instantiating new partial sequences of output using the selected tokens or words, including those identified by the model's probability distribution in previous time steps. The beam search continues generating new partial sequences until a termination condition occurs at which time the best partial sequence is output.

The code review comment 122 indicates how the code change can be improved. The code review comment 122 is generated by the generative language model 118 given an input consisting of an initial version of the source code file, a context of the initial version of the source code file that includes a file-level context and a repository-level context of the file, the code change in a code diff format, instructions for each of the two tasks, and a format of the output. For the first task, the generative language model 118 responds with a code review comment 122 that identifies an issue with the code change.

The second task of the comment generator agent 116 is for the generative language model 118 to determine the severity of the issue with the code change pointed out in the code review comment 122. The generative language model 118 assigns a severity score for the issue that ranges from '1' to '5', with '5' representing the most severe issue. A score of '1' represents a trivial issue that can safely be ignored and which poses no meaningful risk. Examples of a code change having a score of '1' include spelling mistakes, minor formatting issues, and missing comments in the source code. A score of '2' represents low issues that do not affect the current code and can be fixed later although suggested improvements are worthwhile. Examples of a code change having a score of '2' include unused variable or namespace, unused imports, and dead code. Dead code is code that is not executed.

A score of '3' represents medium-level issues that affect the execution of the current code but do not pose a significant risk. Examples of a code change having a score of '3' include missing null checks, refactoring opportunities, minor security vulnerabilities, and minor performance issues. A null check verifies whether a value is null before the program uses the value to perform an operation. Refactoring rewrites source code in order to improve its structure and implementation without changing its external behavior. A security vulnerability is a flaw in the program that may lead to an attacker getting unauthorized access to the program, network, or data. A minor security vulnerability has a potential impact that is limited and does not pose a significant risk to sensitive data or the functionality of the program.

A score of '4' represents a high-level risk that has a reasonable chance of causing customer impact or security concerns if left unaddressed. Examples of a code change having a '4' score includes compliance issues, data privacy issues, performance issues, and breaking changes with other service dependencies. Compliance issues refer to adherence to rules, laws, guidelines relevant to a business. Data privacy issues refer to the unauthorized access around the collection, storage, and usage of personal user data within software applications. Performance issues refer to excessive resource consumption, slow response times, and unexpected errors. A breaking change is a modification to a source code program that causes other parts of the repository to fail.

A score of '5' represents a critical-level risk that poses a significant risk to execution of the current code. Examples of a code change having a '5' score include security vulnerabilities, memory leaks, logic errors that cause incorrect results, bugs that cause the code to crash or bugs that cause the loss of data. A critical security vulnerability a flaw or weakness in the code that can lead a malicious actor to gain significant control over a system, lead to a major data breach, system disruption, or other severe consequences. A memory leak occurs when a program does not release dynamically-allocated memory or when a program cannot access data stored in memory.

If the severity score exceeds a predefined severity threshold, then the comment generator agent 116 passes the initial code review comment 122 to the comment critic agent 124. If the severity score is less than the predefined severity threshold, then the code change is likely to be merged back into the repository. In this case, the system stops and returns a message to the developer, 120, such as "This code change seems fine to me."

The comment critic agent 124 uses a reasoning language model 126 to review the code review comment 122 generated by the generative language model 118 to ensure that the generative language model 118 generated a correct suggestion in the code review comment. Language models are known for their proficiency in processing and generating natural language text for a given task. However, language models are also known to hallucinate which affects the reliability of their output. A hallucination is an output that is coherent and grammatically correct but factually false or nonsensical. A hallucination may be due to limitations in the model's training data, biases in the model, or the inherent complexity of the input given to the model.

In an aspect, the reasoning language model 126 differs from the generative language model 118. The reasoning language model 126 is a neural transformer model with attention in an encoder-decoder configuration that is trained for complex reasoning. The reasoning language model 126 uses a chain-of-thought process that breaks down a task into smaller, manageable steps and takes more time to process an output. Examples of a reasoning language model 126 include OpenAI's "o1" series of AI models and the Gemini 2.0 reasoning models.

The reasoning language model 126 is given instructions to perform the review of the code review comment. The instructions include a list of characteristics that the initial code review comment should not have. The reasoning model 126 responds with a "Yes" or "No" to each of the characteristics. A "Yes" response indicates that the initial code review is bad having one of the listed characteristics and a message is output to the developer to this effect, 128, such as "This AI -generated review comment seems bad to me." A "No" response indicates that there is no problem with the code review comment generated by the first language model and the code review comment is output to the user 128.

### Methods

Attention now turns to a more detailed description of the methods used in the system for code review generation. It may be appreciated that the representative methods do not necessarily have to be executed in the order presented, or in any particular order, unless otherwise indicated. Moreover, various activities described with respect to the methods can be executed in serial or parallel fashion, or any combination of serial and parallel operations. In one or more aspects, the method illustrates operations for the systems and devices disclosed herein.

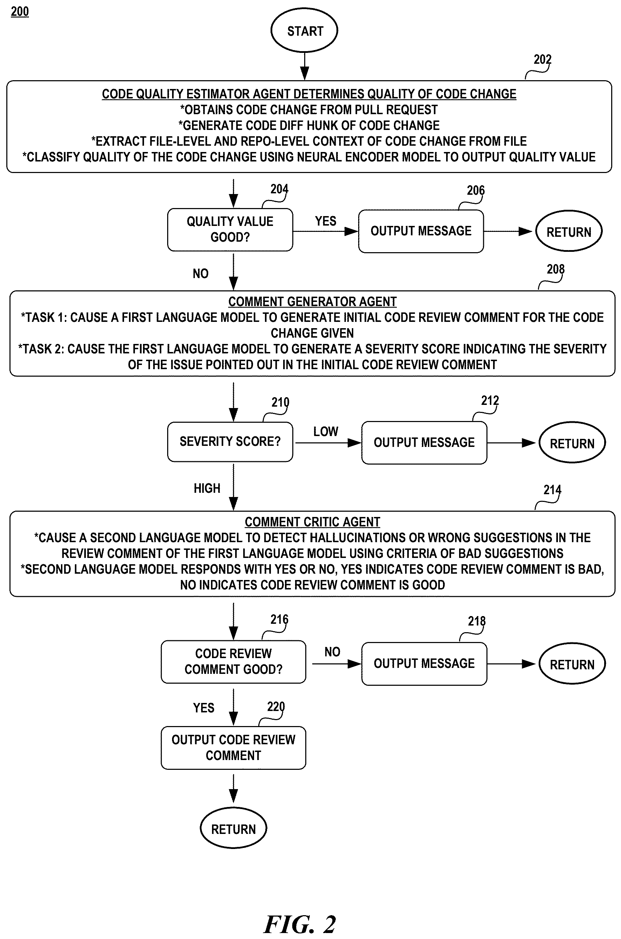

Turning to Fig. 2, there is shown an embodiment of a method of the multi-agent code review comment system 200. The method 200 starts with the code quality estimator agent 106 receiving a code change from a pull request (block 202). The code quality estimator agent 106 transforms the code change into a code diff hunk and retrieves a context of the code change from the source code program of the code change.

In an aspect, the context 104 includes a file-level context and a repository-level context. The file-level context includes import statements, global attributes, the signature of the class where the change occurs, methods that are adjacent to or directly invoked in the area of the code change, and method signatures of other methods in the file. The repo-level context includes method signatures used in the source code program that are defined in other files in the same repository.

To gather the file-level context of the file of the code change, the code quality estimator agent 106 parses the source code file into a syntax tree. The syntax node of the tree of the code change is identified. This is figured out based on the line range provided in the code diff hunk. After this, the process involves selecting the most important syntax structures from the entire file. This selection prioritizes elements like import statements, global attributes, the signature of the class where the change occurs, methods that are adjacent to or directly invoked in the area of change. For other methods in the file, only their signatures are retained. Incorporating this file-level and repo-level context allows the language model to fully understand the nature of the code modification, leading to fewer errors and more accurate predictions.

The code quality estimator agent 106 generates an input to the code quality encoder model 108 for the model 108 to determine the quality of the code change (block 202). The code quality encoder model 108 generates a probability for the single class which is interpreted as a good quality, '0', or a bad quality, '1'. A good quality indicates that the code change does not represent a risk to the repository when the code change is merged into the repository. A poor quality indicates that the code change needs improvement and will be processed further in the multi-agent code review comment generation system.

When the code quality encoder model 108 indicates that the quality of the code change is good (block 204-Yes), the code quality estimator agent 106 outputs a message to the user indicating that the code change is fine to merge back into the repository and the process stops (block 206).

When the code quality encoder model 108 indicates that the quality of the code change is bad (block 204-No), the code quality estimator agent 106 transmits the code change and its context to the comment generator agent 116 to process further.

The comment generator agent 116 uses the generative language model 118 to generate a code review comment for the code change 122 and to generate a severity score on the issue associated with the code change (block 208). The comment generator agent 116 generates an input to the generative language model 118 that includes the file-level context of the source code file having the code change, the repository-level context, the code diff hunk representing the code change, and instructions on the tasks to be performed.

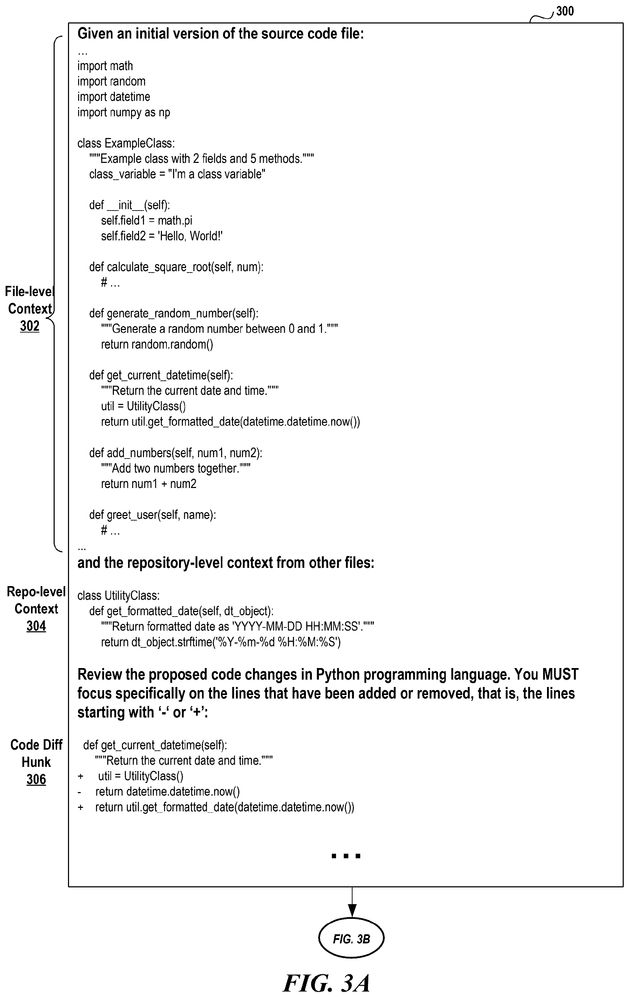

Referring to Figs. 3A - 3C, there is shown an example of an input 300 to the generative language model 118 and model response 316. The input 300 to the generative language model 118 comprises a file-level context 302, a repo-level context 304, a code diff hunk of the code change 306, and the instructions 308. The file-level context includes the import statements, *import math, import random, import datetime, import numpy as np,* the signature of the class where the change occurs, *ExampleClass,* methods that are adjacent to or directly invoked in the area of change, *get current datetime,* method signatures of other methods in the file, *def_init_, def calculate_square_root, def generate_random_number, def get current datetime, def add_numbers, def greet_user.*

The repo-level context 304 includes the signature of the class *UtilityClass* containing the method signature, *def get_formatted_date,* which is included in the code change. The code diff hunk 306 includes the code changes in the code diff format.

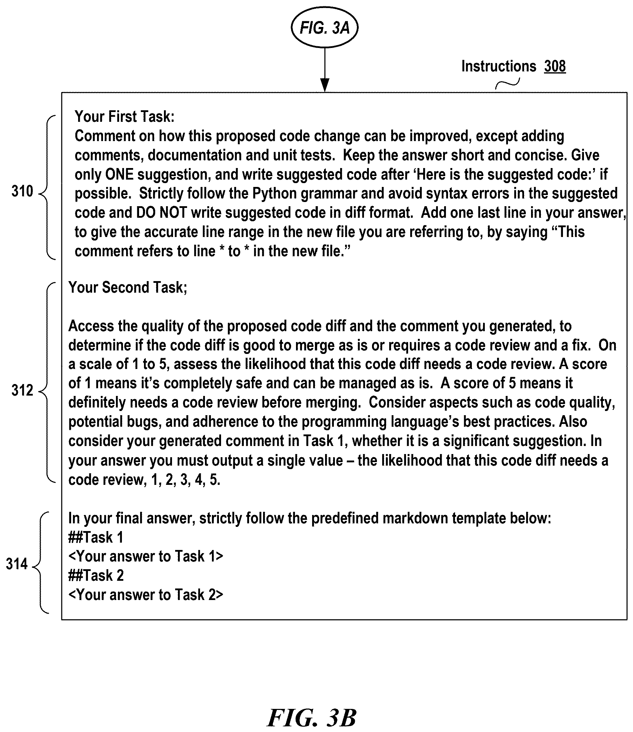

Fig. 3B shows the instructions 308 which includes two tasks 310, 312, and the format of the output 314. The first task 310 instructs the generative language model 118 to generate a code review comment that describes how the code change can be improved. The second task 312 instructs the generative language model 118 to generate a score for the code change that indicates the likelihood that the code diff hunk needs a code review comment. The score ranges from '1' to '5' where '5' represents a critical issue with the code change and '1' represents a low-risk issue with the code change. The format of the output 314 indicates how the model is to output a response to each task.

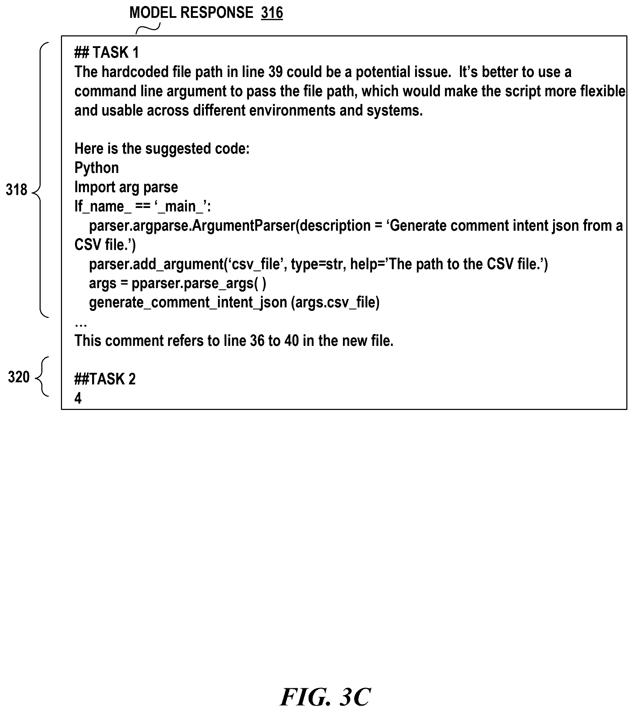

Fig. 3C shows the model response 316. The generative language model's response 316 includes a code review comment for task #1, 318, and the severity score for the code change is '4' which is high.

Turning back to Fig. 2, code changes having a low severity score of '1' and '2' do not need a code review (block 210-low) and instead an output message is generated indicating that the code change can be merged back into the repository (block 212). For code changes having a high severity score of '3', '4', or '5' (block 210-high), the code review comment and code change are output to the comment critic agent 124.

The comment critic agent 124 uses a reasoning language model 126 different from the generative language model that generated the code review comment to critique the code review comment (block 214). The comment critic agent 124 causes the reasoning language model 126 to detect hallucinations in the code review comment or to detect a wrong suggestion in the code review comment. The reasoning language model 126 is given quality criteria that lists characteristics that the reasoning language model 126 uses to determine whether the code review comment is good or bad. If the reasoning language model 126 determines that the code review comment contains any one of the characteristics in the quality criteria, then the code review comment is identified as bad. If the reasoning language model 126 determines that the code review comment does not exhibit any of the characteristics in the quality criteria, then the code review comment is considered good. The reasoning language model 126 responds with a response indicating whether the code review comment is good or bad.

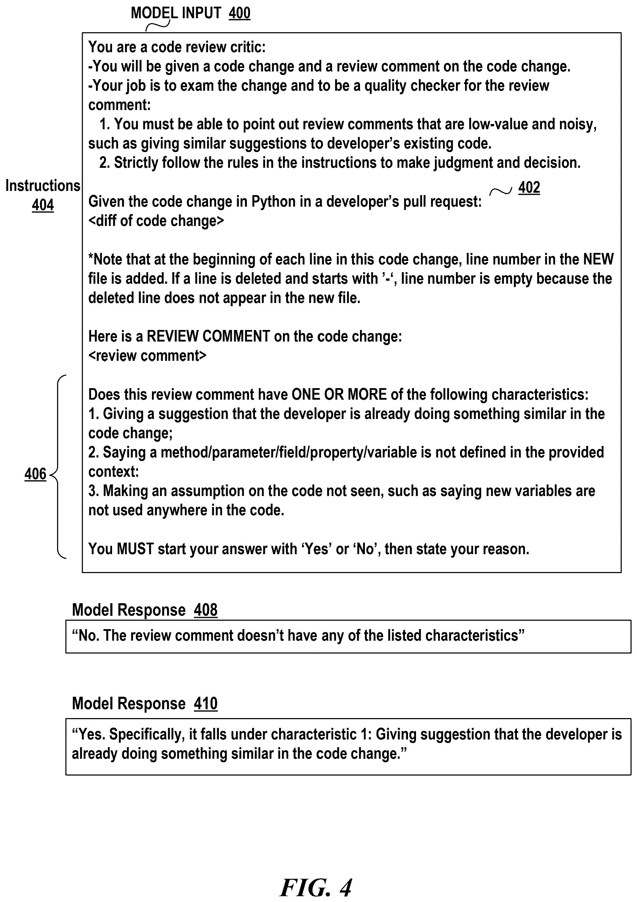

Turning to Fig. 4, there is shown an example of an input 400 to the reasoning language model 126 for the reasoning language model 126 to critique the code review comment against the list of characteristics. The input includes the code change in the code diff format 402 and instructions 404. The instructions include characteristics 406 used by the reasoning language model 126 to determine whether or not the code review comment is good or bad. A code review comment is good if it does not exhibit any of the listed characteristics and a code review comment is bad if it exhibits any one of the listed characteristics.

As shown in Fig. 4, in an aspect, characteristics 406 of a bad code review comment include "Giving a suggestion that the developer is already doing something similar in the code change", "Saying a method/parameter/field/property/variable is not defined in the provided context," and "Making an assumption on the code not seen, such as saying new variables are not used anywhere in the code."

If a code review comment suggests taking an action that the code change has already implemented, then the code review comment represents that the generative language model has not fully understood the source code that was input to the model. For this reason, the code review comment is considered bad.

If a code review comment indicates that a method, parameter, field, property or variable is not defined, it is considered a bad code review comment since it is most likely that the missing definition is in another file that is not included in the context given to the generative language model. It does not provide useful information and as such, it is considered a bad review comment. If a code review comment indicates that a new variable is not used anywhere in the code, it is considered a bad code review comment since it is most likely that it is used somewhere else in the codebase.

The model 126 may generate a response 408 that indicates that the code review comment is good by not exhibiting any of the listed characteristics or the response 410 may indicate that the code review comment is bad having at least one of the listed characteristics.

Turning back to Fig. 2, if the comment critic agent 124 determines that the code review comment is bad (block 216-No), then the comment critic agent 124 outputs a message to the user stating "No comment." If the comment critic agent 124 determines that the code review comment is good (block 216-Yes), then the comment critic agent 124 outputs the code review comment (block 220).

### Operating Environments

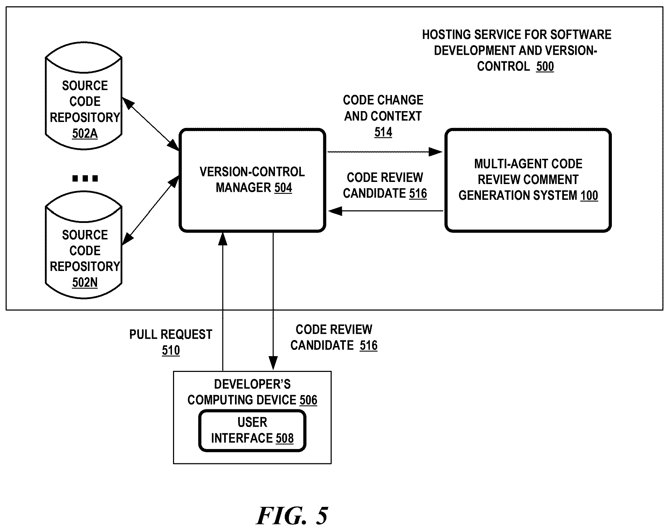

Attention now turns to a description of a system employing the multi-agent code review comment generation system. Turning to Fig. 5, there is shown a hosting service for software development and version control 500. The hosting service 500 may be a web service accessed through a network, such as the Internet. The hosting service 500 includes one or more source code repositories 502A-502N ("502"), a version-control manager 504, and the multi-agent code review comment generation system 100. The source code repositories 502 store source code files, documents and other data. The version-control manager 504 tracks and manages changes made to the files of the source code repositories 502.

The hosting service 500 interacts with a developer's computing device 506, through a user interface 508, having a copy of a source code file stored in one of the source code repositories. A developer via the developer's computing device 506 may initiate a pull request 510 to commit changes back to a version of the source code file stored in the hosting service. The version-control manager 504 initiates a request to the multi-agent code review comment generation system 100 for a code review comment for the changed code of the pull request. The request includes the code change and the context of the code change 515. The multi-agent code review comment generation system 100 generates a code review comment 516 which is sent to the developer 506 and displayed in the user interface 808. The developer may submit additional pull requests including additional changes and eventually the changes are merged into the source code file of the hosting service.

The multi-agent code review comment generation system 100 includes the code quality estimator agent 106, the comment generator agent 116, and the comment critic agent 124. The code quality encoder model 108, language model 118 and language model 126 may be hosted on one or more remote servers and communicate with a respective agent through HTTP-based Representational State Transfer (REST) Application Programming Interfaces (API). A REST API or web API is an API that conforms to the REST protocol. In the REST protocol, the remote servers hosting the models 108, 118, 126 contain a publicly-exposed endpoint having a defined request and response structure expressed in a JavaScript Object Notation (JSON) format. The respective agent 106, 116, 124 issues web APIs containing the prompt to a respective remote server to instruct the model to perform the intended task.

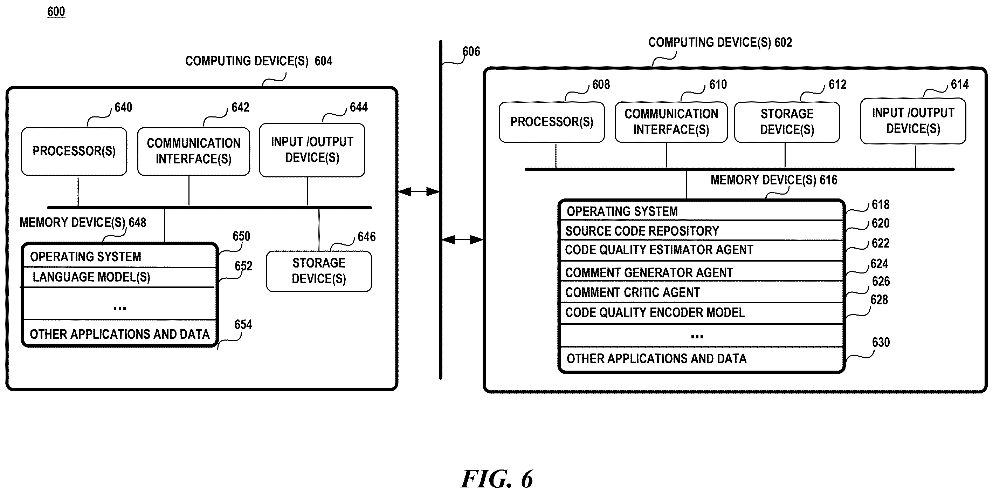

Attention now turns to a discussion of a second aspect of an operating environment 600. Fig. 6 illustrates an operating environment 600 having one or more computing devices 602, 604 communicatively coupled to a network 606. In one aspect, the multi-agents operate on one computing device 602 and the language models may be hosted as a service on a second computing device 604. In another aspect, multi-agents and their respective models are hosted on the same computing device. The aspects of the operating environment are not constrained to a particular configuration.

The computing devices 602, 604 may be any type of electronic device, such as, without limitation, a mobile device, a personal digital assistant, a mobile computing device, a smart phone, a cellular telephone, a handheld computer, a server, a server array or server farm, a web server, a network server, a blade server, an Internet server, a work station, a minicomputer, a mainframe computer, a supercomputer, a network appliance, a web appliance, a distributed computing system, multiprocessor systems, or combination thereof. The operating environment 600 may be configured in a network environment, a distributed environment, a multi-processor environment, or a stand-alone computing device having access to remote or local storage devices.

A computing device 602, 604 may include one or more processors 608, 640, one or more communication interfaces 610, 642, one or more storage devices 612, 646, one or more input/output devices 614, 644, and one or more memory devices 616, 648. A processor 608, 640 may be any commercially available or customized processor and may include dual microprocessors and multi-processor architectures. A communication interface 610, 642, facilitates wired or wireless communications between the computing device 602, 604 and other devices. A storage device 612, 646 may be computer-readable medium that does not contain propagating signals, such as modulated data signals transmitted through a carrier wave. Examples of a storage device 612, 646 include without limitation random access memory (RAM), read-only memory (ROM), electrically erasable programmable read-only memory (EEPROM), flash memory or other memory technology, compact disc read-only memory (CD-ROM), digital versatile disks (DVD), or other optical storage, magnetic cassettes, magnetic tape, magnetic disk storage, all of which do not contain propagating signals, such as modulated data signals transmitted through a carrier wave. There may be multiple storage devices 612, 646, in a computing device 602, 604. The input/output devices 614, 644 may include a keyboard, mouse, pen, voice input device, touch input device, display, speakers, printers, etc., and any combination thereof.

A memory device 616, 648 may be any non-transitory computer-readable storage media that may store executable procedures, applications, and data. The computer-readable storage media does not pertain to propagated signals, such as modulated data signals transmitted through a carrier wave. It may be any type of non-transitory memory device (e.g., random access memory, read-only memory, etc.), magnetic storage, volatile storage, nonvolatile storage, optical storage, DVD, CD, floppy disk drive, etc. that does not pertain to propagated signals, such as modulated data signals transmitted through a carrier wave. A memory device 616, 648 may also include one or more external storage devices or remotely located storage devices that do not pertain to propagated signals, such as modulated data signals transmitted through a carrier wave.

The memory device 616, 648 may contain instructions, components, and data. An agent is a software program that performs a specific function and is otherwise known as a module, program, component, and/or application. The memory device 616 may include an operating system 618, a source code repository 620, a code quality estimator agent 622, a comment generator agent 624, a comment critic agent 626, a code quality encoder model 628, and other applications and data 630. Memory device 648 may include an operating system 650, one or more language model 652, and other applications and data 654.

The computing devices 602, 604 may be communicatively coupled via a network 606. The network 606 may be configured as an ad hoc network, an intranet, an extranet, a virtual private network (VPN), a local area network (LAN), a wireless LAN (WLAN), a wide area network (WAN), a wireless WAN (WWAN), a metropolitan network (MAN), the Internet, a portion of the Public Switched Telephone Network (PSTN), plain old telephone service (POTS) network, a wireless network, a WiFi^{®} network, or any other type of network or combination of networks.

The network 606 may employ a variety of wired and/or wireless communication protocols and/or technologies. Various generations of different communication protocols and/or technologies that may be employed by a network may include, without limitation, Global System for Mobile Communication (GSM), General Packet Radio Services (GPRS), Enhanced Data GSM Environment (EDGE), Code Division Multiple Access (CDMA), Wideband Code Division Multiple Access (W-CDMA), Code Division Multiple Access 2000, (CDMA-2000), High Speed Downlink Packet Access (HSDPA), Long Term Evolution (LTE), Universal Mobile Telecommunications System (UMTS), Evolution-Data Optimized (Ev-DO), Worldwide Interoperability for Microwave Access (WiMax), Time Division Multiple Access (TDMA), Orthogonal Frequency Division Multiplexing (OFDM), Ultra Wide Band (UWB), Wireless Application Protocol (WAP), User Datagram Protocol (UDP), Transmission Control Protocol/ Internet Protocol (TCP/IP), any portion of the Open Systems Interconnection (OSI) model protocols, Session Initiated Protocol/ Real-Time Transport Protocol (SIP/RTP), Short Message Service (SMS), Multimedia Messaging Service (MMS), or any other communication protocols and/or technologies.

The disclosure presented herein also encompasses the subject matter set forth in the following clauses.

Clause A. A system for generating a code review comment, comprising: a processor; and a memory that stores a program to be executed by the processor, wherein the program comprises a plurality of agents having executable instructions to perform acts that: obtain, by a first agent of the plurality of agents, a code change made to a file of a repository; cause, by the first agent of the plurality of agents, a neural encoder model to classify the code change with a risk level for when the code change is merged into the repository, wherein the neural encoder model is given input comprising the code change; cause, by a second agent of the plurality of agents, a first language model to generate a code review comment for the code change when the neural encoder model classifies the code change with a risk level of high, wherein the code review comment comprises a severity score for an issue of the code change, wherein the first language model is given original source code of the code change, the code change and a context of the code change; cause, by a third agent of the plurality of agents, a second language model to review the code review comment for compliance with quality criteria when the severity score of the first language model comprises a high value, wherein the second language model is given the code review comment and the quality criteria, wherein the first language model and the second language model differ; and output, by the third agent of the plurality of agents, the code review comment when the second language model indicates that the code review comment complies with the quality criteria.

Clause B. The system of Clause A, wherein the code change is formatted as a code diff hunk.

Clause C. The system of Clause A, wherein the context of the code change comprises a file-level context and a repo-level context.

Clause D. The system of Clause C, wherein the file-level context comprises an import statement, a global attribute, a signature of a class where the code change occurs, a method adjacent to or directly invoked in an area of the code change, and/or a method signature of another method in the file.

Clause E. The system of Clause C, rein the repo-level context comprises a method signature in the file that is defined in another file of the repository.

Clause F. The system of Clause A, wherein the quality criteria ensures that the code review comment does not include a suggestion existing in the code change.

Clause G. The system of Clause A, wherein the quality criteria ensures that the code review comment does not include a suggestion of identifying a code element not defined in the context.

Clause H. A computer-implemented method for generating a code review comment, comprising: obtaining a code change to a file of a repository; causing, by a first agent, a neural encoder model to determine if the code change represents a risk to the repository if merged into the file, wherein the neural encoder model is given the code change and a context of the code change; causing, by a second agent, a first language model to generate a code review comment for the code change when the neural encoder model determines that the code change represents a risk to the repository if merged into the file, wherein the first language model is given original source code of the code change, the code change and a context of the code change, wherein the code review comment for the code change comprises an issue with the code change and a suggestion for remedying the issue with the code change; causing, by the second agent, the first language model to generate a severity score of the issue with the code change; causing, by a third agent, a second language model to determine if the code review comment generated by the first language model having a high severity score of the issue with the code change includes a wrong suggestion, wherein the first language model and the second language model differ; and outputting, by the third agent, the code review comment upon the second language model determining that the code review comment does not include the wrong suggestion, wherein the first agent, the second agent, and the third agent are separate executable components invoked by a distinct Application Programming Interface (API).

Clause 1. The computer-implemented method of Clause H, wherein the code change is formatted as a code diff hunk.

Clause J. The computer-implemented method of Clause H, wherein the context of the code change comprises a file-level context and a repo-level context.

Clause K. The computer-implemented method of Clause H, wherein the file-level context comprises an import statement, a global attribute, a signature of a class where the code change occurs, a method adjacent to or directly invoked in an area of the code change, and/or a method signature of another method in the file.

Clause L. The computer-implemented method of Clause H, wherein the repo-level context comprises a method signature in the file that is defined in another file of the repository.

Clause M. The computer-implemented method of Clause H, wherein the wrong suggestion indicates a modification already existing in the code change.

Clause N. The computer-implemented method of Clause H, wherein the wrong suggestion indicates that a code element is not defined in the original source code of the code change.

Clause O. The computer-implemented method of Clause H, wherein a wrong suggestion indicates that a code element is not used in the original source code of the code change.

Clause P. A hardware storage device having stored thereon computer executable instructions that are structured to be executable by a processor of a computing device to thereby cause the computing device to generate a code review comment by performing actions that: obtain a code change to a file of a repository; cause, by a first agent, a neural encoder model to determine if the code change represents a risk to the repository if merged into the file, wherein the neural encoder model is given the code change and a context of the code change; cause, by a second agent, a first language model to generate a code review comment for the code change when the neural encoder model determines that the code change represents a risk to the repository if merged into the file, wherein the first language model is given original source code of the code change, the code change and a context of the code change, wherein the code review comment for the code change comprises an issue with the code change and a suggestion for remedying the issue with the code change; cause, by the second agent, the first language model to generate a severity score of the issue with the code change; cause, by a third agent, a second language model to determine if the code review comment generated by the first language model having a high severity score of the issue with the code change includes a wrong suggestion, wherein the first language model and the second language model differ; and output, by the third agent, the code review comment upon the second language model determining that the code review comment does not include the wrong suggestion, wherein the first agent, the second agent, and the third agent are separate executable software components invoked by a distinct Application Programming Interface (API).

Clause Q. The hardware storage device of Clause P having stored thereon computer executable instructions that are structured to be executable by a processor of a computing device to thereby cause the computing device to perform actions that: transform the code change into a code diff format.

Clause R. The hardware storage device of Clause P, wherein the context of the code change comprises a file-level context and a repo-level context.

Clause S. The hardware storage device of Clause R, wherein the file-level context comprises an import statement, a global attribute, a signature of a class where the code change occurs, a method adjacent to or directly invoked in an area of the code change, and/or a method signature of another method in the file.

Clause T. The hardware storage device of Clause R, wherein the repo-level context comprises a method signature in the file that is defined in another file of the repository.

Described herein is a method where a code review comment is automatically generated using multiple agents that perform a dedicated task using a particular language model. A code quality estimator agent uses a code quality encoder model to determine whether a code change to a file of a repository presents a risk to the repository if merged. For those code changes classified as presenting a risk, a comment generator agent uses a generative language model to generate an initial code review comment for the code change and determines a severity of the issue with the code change. A comment critic agent uses a reasoning language model to critique the initial code review comment generated by the generative language model. A final code review comment is output by the comment critic agent when the comment critic agent determines that the initial code review comment is satisfactory.

### Conclusion

The configuration of the code review comment generation system with the multi-agents is advantageous over prior solutions. In one prior solution, all the code changes in a pull request were reviewed all at once which resulted in one or more code changes being overlooked. The techniques described herein review each code change in a pull request one at a time in order to ensure that each code change is thoroughly reviewed thereby reducing bugs into a codebase.

In another prior solution, a single language model was given a code change and instructed to generate a code review. This solution relied extensively on a single language model to perform the code review in one step which resulted at times in erroneous code review decisions. The techniques described herein performs the code review process in separate steps with smaller tasks given to different models which results in the process identifying more accurately issues in the changed code and in generating a more accurate code review comment.

The multiple agents 106, 116, 124 are separate programs that each utilize a different language model. The code quality encoder model 108 is a smaller custom model that may reside on the same machine as the system 100 thereby providing a faster response. The generative language model 118 used by the comment generator agent 116 and the reasoning language model 126 used by the comment critic agent 124 are large language models comprising billions of parameters from being trained on terabytes of data. There is a cost for using each of these models since they are hosted on a web server. There is also a latency cost in retrieving a response from a remotely-accessed model. The independent structure of the multi-agents allows an agent to utilize a different model to accommodate a user's cost constraints and to utilize newer, faster models as they become available.

One of ordinary skill in the art understands that the techniques disclosed herein are inherently digital. The operations used to cause a language model to perform the specific tasks are inherently digital. The human mind cannot interface directly with a CPU or network interface card, or other processor, or with RAM or other digital storage, to read or write the necessary data and perform the necessary operations disclosed herein.

The embodiments are also presumed to be capable of operating at scale, within tight timing constraints in production environments (e.g., version-control source code repository), and in testing labs for production environments as opposed to being mere thought experiments. Hence, the human mind cannot perform the operations described herein in a timely manner and with the accuracy required for these intended uses.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It may be appreciated that the representative methods described herein do not necessarily have to be executed in the order presented, or in any particular order, unless otherwise indicated. Moreover, various activities described with respect to the methods can be executed in serial or parallel fashion, or any combination of serial and parallel operations.

## Claims

1. A system (100) for generating a code review comment (122), comprising:
a processor (608, 640); and
a memory (616, 648) that stores a program to be executed by the processor, wherein the program comprises a plurality of agents having executable instructions to perform acts that:
obtain, by a first agent (106) of the plurality of agents, a code change made to a file of a repository (102);
cause, by the first agent (106) of the plurality of agents, a neural encoder model (108) to classify the code change with a risk level for when the code change is merged into the repository, wherein the neural encoder model is given input comprising the code change;
cause, by a second agent (116) of the plurality of agents, a first language model (118) to generate a code review comment for the code change when the neural encoder model classifies the code change with a risk level of high, wherein the code review comment comprises a severity score for an issue of the code change, wherein the first language model is given original source code of the code change, the code change and a context of the code change;
cause, by a third agent (124) of the plurality of agents, a second language model (126) to review the code review comment for compliance with quality criteria when the severity score of the first language model comprises a high value, wherein the second language model is given the code review comment and the quality criteria, wherein the first language model and the second language model differ; and
output, by the third agent of the plurality of agents, the code review comment (122) when the second language model indicates that the code review comment complies with the quality criteria.

2. The system of claim 1, wherein the code change is formatted as a code diff hunk.

3. The system of claim 1, wherein the context of the code change comprises a file-level context and a repo-level context.

4. The system of claim 3, wherein the file-level context comprises an import statement, a global attribute, a signature of a class where the code change occurs, a method adjacent to or directly invoked in an area of the code change, and/or a method signature of another method in the file.

5. The system of claim 3, wherein the repo-level context comprises a method signature in the file that is defined in another file of the repository.

6. The system of claim 1, wherein the quality criteria ensures that the code review comment does not include a suggestion existing in the code change.

7. The system of claim 1, wherein the quality criteria ensures that the code review comment does not include a suggestion of identifying a code element not defined in the context.

8. A computer-implemented method (200) for generating a code review comment (122), comprising:
obtaining a code change to a file of a repository (102);
causing, by a first agent (106), a neural encoder model (108) to determine if the code change represents a risk to the repository if merged into the file, wherein the neural encoder model is given the code change and a context of the code change;
causing, by a second agent (116), a first language model (118) to generate a code review comment for the code change when the neural encoder model determines that the code change represents a risk to the repository if merged into the file, wherein the first language model is given original source code of the code change, the code change and a context of the code change, wherein the code review comment for the code change comprises an issue with the code change and a suggestion for remedying the issue with the code change;
causing, by the second agent (116), the first language model (118) to generate a severity score of the issue with the code change;
causing, by a third agent (124), a second language model (126) to determine if the code review comment generated by the first language model having a high severity score of the issue with the code change includes a wrong suggestion, wherein the first language model and the second language model differ; and
outputting, by the third agent, the code review comment (122) upon the second language model determining that the code review comment does not include the wrong suggestion,
wherein the first agent, the second agent, and the third agent are separate executable components invoked by a distinct Application Programming Interface, API.

9. The computer-implemented method of claim 8, wherein the code change is formatted as a code diff hunk.

10. The computer-implemented method of claim 8, wherein the context of the code change comprises a file-level context and a repo-level context.

11. The computer-implemented method of claim 8, wherein the file-level context comprises an import statement, a global attribute, a signature of a class where the code change occurs, a method adjacent to or directly invoked in an area of the code change, and/or a method signature of another method in the file.

12. The computer-implemented method of claim 8, wherein the wrong suggestion indicates a modification already existing in the code change.

13. The computer-implemented method of claim 8, wherein the wrong suggestion indicates that a code element is not defined in the original source code of the code change.

14. The computer-implemented method of claim 8, wherein a wrong suggestion indicates that a code element is not used in the original source code of the code change.

15. A hardware storage device (612, 646) having stored thereon computer executable instructions that are structured to be executable by a processor (608, 640) of a computing device to thereby cause the computing device to generate a code review comment (122) by performing actions that:
obtain a code change to a file of a repository (102);
cause, by a first agent (106), a neural encoder model (108) to determine if the code change represents a risk to the repository if merged into the file, wherein the neural encoder model is given the code change and a context of the code change;
cause, by a second agent (116), a first language model (118) to generate a code review comment for the code change when the neural encoder model determines that the code change represents a risk to the repository if merged into the file, wherein the first language model is given original source code of the code change, the code change and a context of the code change, wherein the code review comment for the code change comprises an issue with the code change and a suggestion for remedying the issue with the code change;
cause, by the second agent (116), the first language model (118) to generate a severity score of the issue with the code change;
cause, by a third agent (124), a second language model (126) to determine if the code review comment generated by the first language model having a high severity score of the issue with the code change includes a wrong suggestion, wherein the first language model and the second language model differ; and
output, by the third agent, the code review comment (122) upon the second language model determining that the code review comment does not include the wrong suggestion,
wherein the first agent, the second agent, and the third agent are separate executable software components invoked by a distinct Application Programming Interface, API.
